# FASCICULE DE BREVET EUROPEEN

(11) **EP 2 582 488 B1**
(45) Date de publication et mention de la délivrance du brevet: **31.08.2016**
(21) Numéro de dépôt: 11735479.5
(22) Date de dépôt: 10.06.2011
(51) Int. Cl.: B23Q 1/28

(54) **DISPOSITIF ET PROCÉDÉ DE POSITIONNEMENT ET DE VERROUILLAGE D'UN ÉLÉMENT MOBILE SUR UN AXE DE GUIDAGE**
VORRICHTUNG UND VERFAHREN ZUR POSITIONIERUNG UND VERRIEGELUNG EINES BEWEGLICHEN ELEMENTS AUF EINER FÜHRUNGSACHSE
DEVICE AND METHOD FOR POSITIONING AND LOCKING A MOVABLE ELEMENT ON A GUIDE AXIS

(30) Priorité: 02.09.2010 FR 1056980; 16.06.2010 FR 1054782
(43) Date de publication de la demande: 24.04.2013
(73) Titulaire: European Aeronautic Defence And Space Company Eads France, 75016 Paris (FR)
(72) Inventeur: LE VACON, Philippe, F-78460 Choisel (FR); SUAREZ ROOS, Adolfo, F-75116 Paris (FR)
(74) Mandataire: Ipside
(86) Numéro de dépôt international: PCT/FR2011/051329
(87) Numéro de publication internationale: WO 2011/157934

(56) Documents cités:
- WO-A2-2010/003847
- DE-A1- 3 620 969

## Description

### Domaine de l'invention

La présente invention concerne un dispositif de positionnement et de verrouillage d'un élément mobile sur un axe de guidage. L'invention a également pour objet un procédé de mise en oeuvre du fonctionnement d'un tel dispositif. La présente invention trouve une application particulière mais non exclusive dans les dispositifs commandés de positionnement et de verrouillage d'outils par rapport à une pièce, pour la réalisation d'une pluralité de séquences opératoires telles que des contrôles, des assemblages, des usinages, etc.

L'invention a pour but d'améliorer la précision de positionnement d'un élément mobile sur un axe de guidage.

### Etat de la technique

Dans l'état de la technique, les moyens de déplacement d'un élément mobile monté coulissant sur un axe de guidage sont nombreux. Il en existe de toutes sortes, et ils sont généralement choisis en fonction de la taille et du poids de l'élément à déplacer. Ces éléments mobiles peuvent être des chariots, des cabines, des plateformes, mais aussi des outils, etc.

Les moyens privilégiés pour assurer ces déplacements sont des actionneurs mettant en oeuvre des moteurs rotatifs liés à un mécanisme de transformation en mouvement linéaire. Ils permettent de déplacer l'élément mobile le long de l'axe de guidage, au moyen de structures mécaniques d'entraînement continu. Ces actionneurs utilisent de préférence une transmission sur la totalité de la course utile de l'élément mobile sur l'axe de guidage. Une telle transmission est par exemple un moteur électrique associé à une courroie, ou à un système pignon crémaillère, ou à une roue de friction, ou encore un vérin linéaire pneumatique ou hydraulique.

Toutefois, l'immobilisation de l'élément mobile, sur une position préalablement programmée, par une unité de commande, s'avère plus complexe. En effet, selon la précision de positionnement à atteindre et les efforts appliqués sur l'élément à immobiliser, il est parfois nécessaire de compléter ces moyens de déplacement par des moyens de freinage voire des moyens de verrouillage à la position souhaitée.

Il existe donc un besoin de disposer de moyens de verrouillage d'un élément mobile, monté coulissant sur un axe de guidage, à une position programmée avec une parfaite précision. Ceci implique de régler les problèmes liés aux solutions existantes tels que le jeu du aux réducteurs et aux freins, les choix des moyens de transmissions en fonction de la course souhaitée (crémaillère, courroie, ...), le poids de l'ensemble, la précision relative par rapport à la précision absolue, la sécurité liée à l'accélération et à la distance à parcourir en fonction de la course.

Le document DE-3620969-A décrit un dispositif selon le préambule de la revendication 1.

### Exposé de l'invention

La présente invention propose de répondre à ce besoin tout en remédiant aux problèmes susmentionnés en proposant un dispositif semi-automatique ou automatique de positionnement et de verrouillage précis d'un élément mobile sur un axe de guidage.

Pour ce faire, le dispositif de positionnement et de verrouillage est configuré de sorte à permettre le déplacement de l'élément mobile tout en s'affranchissant des structures mécaniques d'entraînement continu usuellement utilisées dans l'état de la technique pour réaliser le positionnement de l'élément mobile et son verrouillage précis à une position dite cible à atteindre.

Plus précisément, l'invention a pour objet un dispositif de positionnement et de verrouillage selon la revendication 1.

Avantageusement, l'invention est également caractérisée en ce que ledit élément mobile est monté coulissant sur un axe de guidage correspondant à l'axe de verrouillage.

Avantageusement, l'invention est également caractérisée en ce que le moyen d'accostage est configuré de sorte à ce que l'organe de verrouillage est activé lorsque l'élément mobile se situe dans une zone d'approche prédéfinie de la position cible, de sorte à réguler la vitesse de déplacement de l'élément mobile sur l'axe de guidage.

En outre, le moyen de verrouillage est configuré de sorte à être activé en une position verrouillée lorsque l'élément mobile se situe au niveau de la position cible.

Avantageusement, l'invention est également caractérisée en ce que l'organe et le moyen de verrouillage sont des cartouches de blocage.

Avantageusement, l'invention est également caractérisée en ce que le corps et la tige forment un vérin, le vérin étant à double effet.

Avantageusement, l'invention est également caractérisée en ce que l'élément mobile est un chariot apte à recevoir un outil destiné à l'assemblage et/ou l'usinage et/ou le contrôle d'une pièce.

Plus précisément, l'invention a également pour objet un procédé de mise en oeuvre du fonctionnement du dispositif de positionnement et de verrouillage de l'élément mobile suivant l'axe, , dans lequel :
- guidage de l'élément mobile à destination d'une position cible prédéfinie,
- dès que l'élément mobile atteint une position d'approche séparée de la position cible d'une distance prédéfinie, on active l'organe de verrouillage, et on effectue un pilotage automatique du déplacement de l'élément mobile,
- dès que l'élément mobile atteint la position cible, on active le moyen de verrouillage.

Avantageusement, l'invention est également caractérisée en ce qu'entre une position de départ et une position d'approche, on effectue un pilotage automatique du déplacement de l'élément mobile sur l'axe de guidage de manière séquentielle

L'invention a également pour objet une grille de perçage pour l'exécution d'une multiplicité de trous, selon la revendication 10.

### Brève description des dessins

L'invention sera mieux comprise à la lecture de la description qui suit et à l'examen des figures qui l'accompagnent. Celles-ci ne sont présentées qu'à titre illustratif mais nullement limitatif de l'invention. Les figures montrent :
- Figure 1: une représentation schématique du dispositif selon l'invention ;
- Figure 2 : un diagramme fonctionnel d'un procédé selon l'invention ;
- Figure 3a-3f : des représentations schématiques du dispositif en fonction de la mise en oeuvre des étapes du procédé selon la figure 2 ;
- Figure 4 : une représentation schématique d'une variante de réalisation du dispositif selon l'invention ;

### Description détaillée de modes de réalisation de l'invention

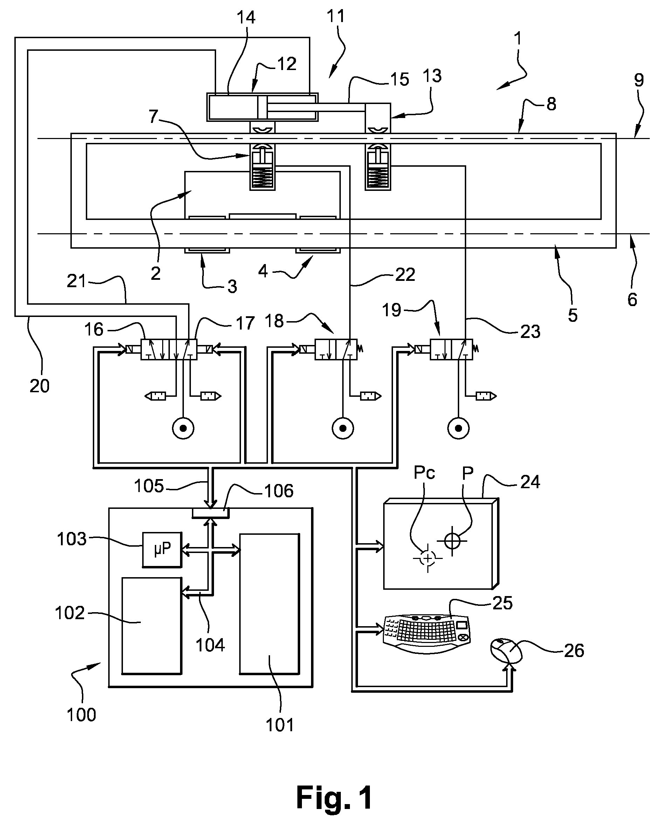

La figure 1, illustre une représentation schématique d'un dispositif 1 selon l'invention. La figure 1 montre un élément mobile 2 apte à être déplacé manuellement par un opérateur (non représenté). Dans un mode de réalisation de l'invention, l'élément mobile 2 est un chariot. Cet élément mobile 2 comporte des moyens de coulissement 3 et 4 aptes à être déplacés dans les deux sens de direction, le long d'un rail 5 suivant un axe 6 de guidage. L'élément mobile 2 est asservi en position. Le déplacement de ces moyens de coulissement 3 et 4 est commandé par une unité de commande 100. Les axes 6 et 9 peuvent être un seul et même axe.

Dans l'exemple de la figure 1, le rail 5 est longitudinal et présente une section cylindrique. La forme et les dimensions du rail 5 ne sont pas limitées à celles représentées à cette figure 1. En effet, le rail 5 peut être incurvé et non cylindrique.

Le dispositif 1 comporte également un moyen 7 de verrouillage destiné à limiter les mouvements libres en translation de l'élément mobile 2 sur l'axe 6 de guidage. Pour cela, le moyen 7 de verrouillage est monté coulissant sans effort sur un rail 8 suivant un axe 9 de verrouillage. L'axe 9 de verrouillage est parallèle à l'axe 6 de guidage. Dans l'invention, Le moyen 7 de verrouillage est solidaire de l'élément mobile 2.

On entend par « solidaire de», le fait que les éléments considérés sont solidarisés soit de manière temporaire (accouplement magnétique, etc.), soit de manière permanente, par exemple par soudure, vis, etc. Les différents éléments solidarisés forment en outre un ensemble rigide et indéformable dans des conditions normales d'utilisation.

Le moyen 7 de verrouillage comporte au moins une première position dite position déverrouillée, dans laquelle le mouvement suivant l'axe 9 de verrouillage est libre, et une seconde position, dite position verrouillée, dans laquelle le mouvement suivant l'axe 9 de verrouillage est bloqué quelle que soit la position de l'élément mobile 2 sur l'axe 6 de guidage. Dans la suite de la description, une activation du moyen 7 de verrouillage sera considérée comme étant le passage d'une position déverrouillée à une position verrouillée dudit moyen 7. De même, la désactivation du moyen 7 de verrouillage sera considérée comme étant le passage d'une position verrouillée à une position déverrouillée dudit moyen 7.

Ce moyen 7 de verrouillage, commandé par l'unité de commande 100, permet de positionner et de verrouiller l'élément mobile 2 à une position cible à atteindre préalablement programmé. Toutefois, il est observé un certain délai de latence entre le moment où la commande d'activation du moyen 7 de verrouillage est reçue par l'unité de commande 100 et le moment où le moyen 7 de verrouillage est effectivement activé, lorsqu'un opérateur déplace manuellement l'élément mobile 2 sur l'axe de guidage 6. Ce délai de latence diminue la précision de positionnement de l'élément mobile 2 par rapport à la position cible à atteindre.

Pour palier à cette perte de précision due au délai de latence, il est nécessaire pour l'opérateur de maîtriser la vitesse de déplacement de l'élément mobile 2 sur l'axe 6 de guidage afin d'anticiper le délai de latence nécessaire à l'unité de traitement 100 pour activer le moyen 7 de verrouillage. Toutefois, cette vitesse de déplacement de l'élément mobile 2 sur l'axe de guidage 6 est difficile à maîtriser du fait qu'elle est relativement fluctuante. Il devient par conséquent extrêmement complexe pour l'opérateur de s'arrêter avec précision sur la position cible P à atteindre.

On entend par « position cible à atteindre », une position souhaitée de l'élément mobile 2 sur l'axe 6 de guidage, préalablement défini au niveau de l'unité de commande.

Pour résoudre cet inconvénient, l'invention comporte un moyen 11 d'accostage ou d'approche. Ce moyen 11 d'accostage a pour but de réguler la vitesse de l'élément mobile 2, lorsque ce dernier atteint une zone d'approche ZA par rapport à la position cible P. Ce moyen 11 d'accostage comporte un actionneur 12 linéaire, de type vérin, et un organe 13 de verrouillage, de préférence du même type que le moyen 7 de verrouillage. Le vérin 12 comporte un corps 14 et une tige 15 de piston. Le corps 14 est monté solidaire du moyen 7 de verrouillage, et la tige 15 est montée solidaire de l'organe 13 de verrouillage. Dans un mode de réalisation préféré, le vérin est à double effet. Pour augmenter en précision, il est préférable que la course du vérin 12 soit faible. C'est avant tout un compromis à trouver sur le ratio correct de la masse de l'élément mobile 2 par rapport à la course produite par le vérin 12, et par rapport à la rigidité du système. Dans le cas d'une application de perçage pour la pose de fixations sur une structure aéronautique, la course doit être d'environ 30 mm. L'organe 13 de verrouillage a pour but de verrouiller le déplacement de la tige 15 du vérin 12. L'organe 13 de verrouillage est monté coulissant sans effort sur le rail 8.

On entend par zone d'approche ZA de la position cible P, une zone entourant la position cible P à atteindre. Dans un exemple, la zone d'approche ZA est délimitée par une distance d'environ 10 mm de part et d'autre de la position ciblée. Pour une position cible P à atteindre, on définit donc les limites de cette zone d'approche ZA comme étant PAg et PAd respectivement la position d'approche gauche et la position d'approche droite.

La notion de droite ou de gauche s'apprécie en fonction d'un axe normé en x et de la position du chariot 2 par rapport à la position cible P à atteindre. On considère la direction de droite comme étant toutes valeurs de x positives et la direction de gauche comme étant toutes valeurs de x négatives.

L'organe 13 de verrouillage comporte au moins une première position dite position déverrouillée dans laquelle le mouvement suivant l'axe 9 de verrouillage est libre, et une seconde position dite position verrouillée dans laquelle le mouvement suivant l'axe 9 de verrouillage est bloqué quelle que soit la position de l'élément mobile 2 sur l'axe 6 de guidage. Comme précédemment, une activation de l'organe 13 de verrouillage sera considérée comme étant le passage d'une position déverrouillée à une position verrouillée dudit organe 13. De même, la désactivation de l'organe 13 de verrouillage sera considérée comme étant le passage d'une position verrouillée à une position déverrouillée dudit organe 13.

Lorsque l'organe de verrouillage 13 est activé et que le moyen 7 de verrouillage est désactivé, l'activation du vérin 12 permet un déplacement de son corps 14 par rapport à sa tige 15 immobile, entrainant ainsi un mouvement de l'élément mobile 2 à vitesse constante sur l'axe 6 de guidage. Comme la vitesse de déplacement de l'élément mobile 2 est constante, l'unité de commande 100 peut donc anticiper d'une façon stable l'activation du moyen 7 et l'élément mobile 2 peut être verrouillé avec exactitude sur la position cible P souhaitée.

Le moyen 7 et l'organe 13 de verrouillage sont par exemple des unités de blocage pneumatique, ou des freins, ou tout autre moyen permettant de bloquer le mouvement libre respectivement de l'élément mobile 2 et de la tige 15 du vérin 12.

Dans le mode de réalisation de la figure 1, le vérin 12, le moyen 7 et l'organe 13 de verrouillage sont connectés respectivement à un ensemble d'électrovannes 16, 17, 18, 19 par des connectiques respectivement 20, 21, 22, 23. Ces électrovannes 16, 17, 18, 19, alimentées en gaz ou fluide (par un système pneumatique ou hydraulique de type connu), sont activées ou désactivées par l'unité de commande 100, afin de remplir ou de vider différentes chambres pour provoquer des activations et/ou des désactivations de l'organe 13 et/ou du moyen 7, ainsi que le déplacement de la tige 15 par rapport au corps 14.

Dans l'invention, l'élément mobile 2 est muni de moyens d'acquisition (non représentés). Ces moyens d'acquisition permettent directement ou indirectement, dans un repère associé à l'axe de guidage 6, de disposer de données de position en temps réel de l'élément mobile 2.

Les moyens d'acquisition comportent par exemple au moins un capteur linéaire magnétostrictif, à potentiomètre, inductif, ou tout autre type de capteur de position. Dans un mode de réalisation préféré, les moyens d'acquisition sont une règle numérique absolue.

L'unité de commande 100, comporte une mémoire programme 101 et une mémoire de données 102 connectées à un microprocesseur 103 via un bus de communication 104. L'unité de commande 100 est connectée aux différents organes 7, 12, 13, 24, 25, 26 par l'intermédiaire d'un autre bus de communication 105. On entend par « connectée aux différents organes », une connection par une liaison filaire, radio ou équivalent.

L'unité de commande 100 comporte en outre, une interface d'entrée/sortie 106, permettant de relier les bus 104 et 105.

Le bus de communication 105 est connecté à un moniteur ou écran 24. L'écran permet d'indiquer à l'opérateur le sens du mouvement à produire sur l'élément mobile 2 pour atteindre la zone du point cible P et signaler les opérations en cours. L'unité de commande 100 est également connectée à une ou plusieurs interfaces homme/machine 25, 26. Dans l'invention, on entend par interface homme/machine un clavier 25, et/ou un dispositif de pointage comme par exemple une souris 26. En variante, l'écran 24 est tactile et permet tout type d'interaction possible avec un clavier 25 ou une souris 26.

Les actions menées par l'unité de commande 100, sont ordonnées par le microprocesseur 103. Le microprocesseur 103, produit en réponse aux codes instructions enregistrés dans la mémoire programme 101, des ordres destinés à mettre en oeuvre le procédé de l'invention, ainsi que les différents organes associés à l'unité de commande 100.

La mémoire programme 101 comporte à cet effet plusieurs zones de programmes, correspondant respectivement à une suite d'étapes.

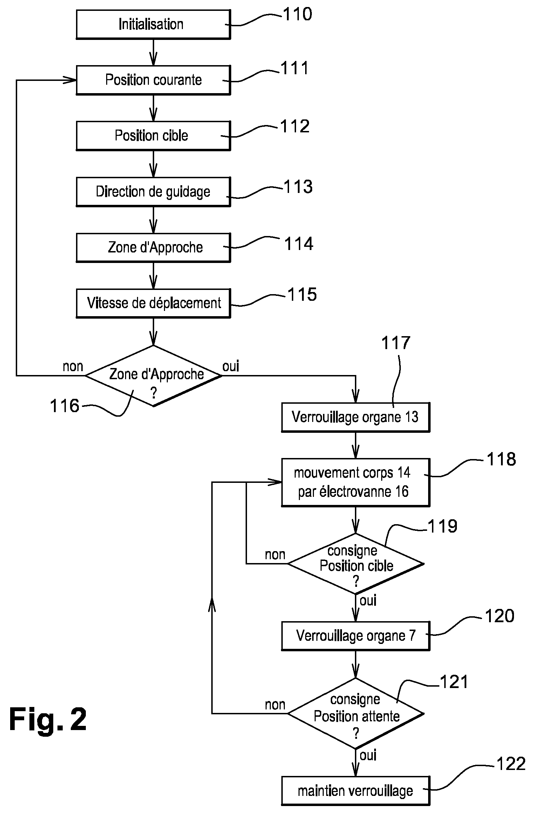

La figure 2 est un exemple d'un diagramme fonctionnel du procédé selon l'invention. On considère durant ce procédé que, suivant les indications visuelles présentes sur l'écran 24, l'opérateur assure manuellement le déplacement de l'élément mobile 2. Lorsque l'élément mobile 2 atteint la zone d'approche ZA prédéfinie de la position cible P, l'unité de commande 100 verrouille l'organe 13 et le dispositif prend le contrôle du déplacement de l'élément mobile 2 suivant l'axe de guidage 6 jusqu'à son verrouillage par l'organe 7. Ce mode de fonctionnement est dit semi-automatique.

Dans l'exemple illustré à la figure 2, l'élément mobile 2 est déplacé suivant l'axe 6 de droite vers la gauche. En sachant que les mêmes étapes sont également exécutées lorsque le déplacement s'effectue de gauche à droite.

A une étape 110, l'unité de commande 100 procède à une initialisation des paramètres de fonctionnement du dispositif. Ces paramètres d'initialisation sont notamment une désactivation de l'organe 13 et du moyen 7 de verrouillage. A une étape 111, l'unité de commande 100 détermine la position courante Pc (figure 1) de l'élément mobile 2, à partir des données fournies par les moyens d'acquisition.

A une étape 112, l'unité de commande 100 détermine la position cible P à atteindre et de préférence la position cible suivante Ps. A une étape 113, l'unité de commande 100 détermine la direction de guidage en fonction de la position courante Pc et de la position cible P.

A une étape 114, l'unité de commande 100 détermine la zone d'approche par rapport à la position cible. L'unité de commande 100 détermine pour cela la position d'approche droite PAd. Dans un mode de réalisation préféré, la position d'approche PAd est définie à environ 10 mm de la position cible P. De manière générale, la zone d'approche ZA est un cercle centré sur la position cible P et de rayon correspondant à la distance entre le point cible P et la position d'approche droite Pad.

A une étape 115, l'unité de commande 100 détermine la vitesse de déplacement de l'élément mobile 2 dans la zone d'approche.

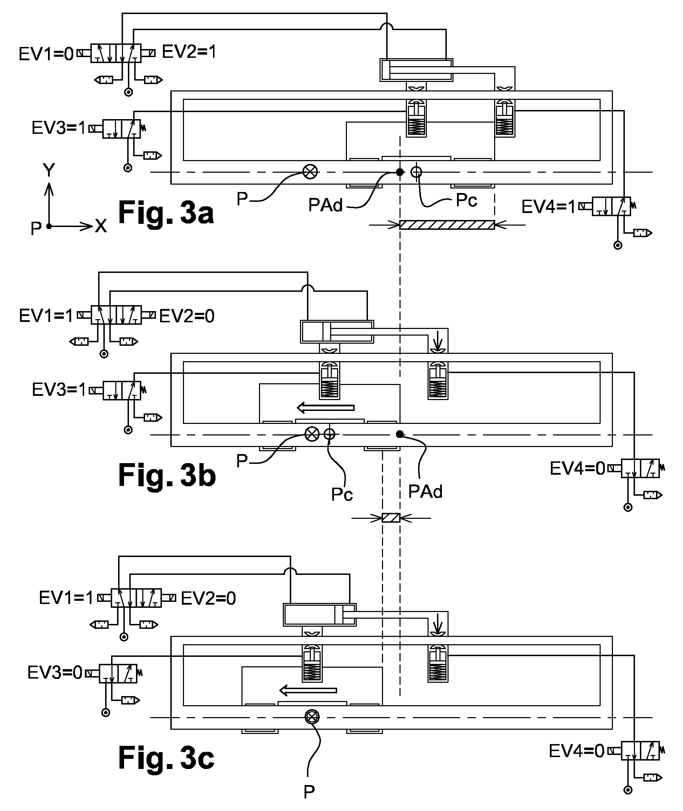

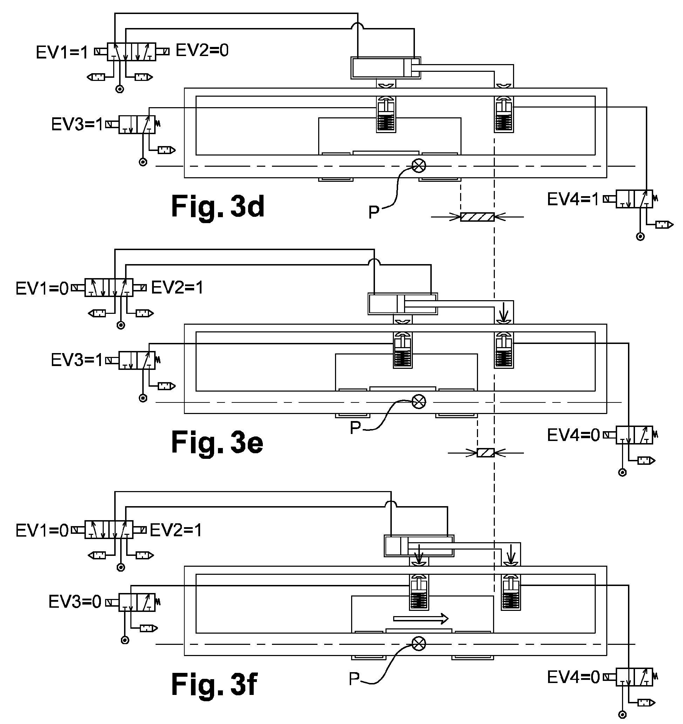

Lorsqu'on est en mode automatique, l'unité de commande 100 pilote le déplacement de l'élément mobile 2 suivant l'axe 6 en fonction des données fournies par les étapes 110 à 115. Lorsqu'on est en mode semi-automatique, l'élément mobile 2 est libre en déplacement sous l'action de l'opérateur. La figure 3a illustre ce déplacement piloté par l'unité de commande 100 ou par l'opérateur. La figure 3d illustre également ce déplacement lorsqu'il s'effectue de gauche à droite.

A une étape 116, l'unité de commande 100 compare, de manière permanente, la position courante Pc de l'élément mobile à la position d'approche Pad. Tant que la zone d'approche n'est pas atteinte, les étapes 110 à 115 sont réitérées et l'élément mobile reste libre en déplacement par l'opérateur.

Dès que la zone d'approche est atteinte, alors l'unité de commande 100 exécute une étape 117 où l'organe 13 de verrouillage est activé. L'exécution de l'étape 117 dépend également de la concordance entre la longueur de la course du corps 14 du vérin 12 et la distance entre la position courante Pc et la position cible P. D'une manière générale on considère que la valeur de la course du vérin est au moins égale à deux fois la valeur fixée pour la valeur de la position d'approche ( dans ce mode de réalisation , PA est égale à 10 mm et la course du vérin est égale à 30 mm). La figure 3b est une illustration de cette phase de fonctionnement dite phase d'approche. La figure 3e illustre cette phase de fonctionnement dite phase d'approche lorsque le déplacement s'effectue de gauche à droite.

Dès que la zone d'approche est atteinte, l'élément mobile 2 n'est plus libre en déplacement sur l'axe 6. C'est l'unité de traitement 100 qui prend automatiquement le contrôle du déplacement de l'élément mobile 2 sur l'axe 6.

A une étape 118, l'unité de commande 100 active l'électrovanne 16 permettant le déplacement de l'élément mobile 2 vers la gauche. Le déplacement du corps 14 du vérin 12, et par voie de conséquence de l'élément mobile 2, s'effectue à une vitesse constante, prédéterminée à l'étape 115.

A une étape 119, l'unité de commande 100 compare, de manière permanente, la position courante Pc de l'élément mobile à la position cible P. Lorsque la position P est atteinte, alors l'unité de commande 100 exécute une étape 120, où le moyen 7 de verrouillage est activé. Cette activation est réalisée par anticipation de la part de l'unité de commande afin d'immobiliser l'élément mobile 2 de manière précise sur la position cible P souhaitée. La précision obtenue selon l'invention est de l'ordre de quelques centièmes de millimètres. La figure 3c illustre parfaitement cette phase de fonctionnement. La figure 3f illustre cette phase de fonctionnement lorsque le déplacement s'effectue de gauche à droite.

A une étape 121, l'unité de commande 100 détermine une consigne de position d'attente. Si la consigne de position d'attente a été déterminée, alors à une étape 122, l'unité de commande 100 maintien le verrouillage des organes 7 et 13. Sinon, l'unité de commande 100 réitère l'étape 118.

L'invention permet un mode de fonctionnement totalement automatique, aussi bien lorsque la distance qui sépare deux points cibles successifs est compatible avec la course utile du vérin 12 linéaire, que lorsque cette distance est supérieure à celle-ci, dans ce cas on réalise de manière automatique une séquence d'avance par pas égale à la course du vérin 12.

On entend par « fonctionnement automatique », un déplacement de cet élément mobile 2 entièrement piloté par l'unité de commande 100.

Dans un exemple de procédé pour un mode de fonctionnement totalement automatique enclenché à la suite de l'étape 120, on considère la succession d'étapes suivantes :
- Modification de la position courante Pc égale à la position cible P et la position cible P égale à la position cible suivante ;
- désactivation de l'organe 13 de verrouillage ;
- Activation de l'électrovanne 17 permettant le déplacement de la tige 15 par rapport à la nouvelle position cible pour une direction de guidage vers la gauche ;
- Activation de l'électrovanne 16 permettant le déplacement de la tige 15 par rapport à la nouvelle position cible pour une direction de guidage vers la droite ;
- Activation de l'organe 13 de verrouillage pour bloquer le déplacement de la tige 15 ;
- Désactivation du moyen 7 de verrouillage ;
- Activation de l'électrovanne 16 pour permettre un déplacement de l'élément mobile 2 vers la gauche ;
- Activation de l'électrovanne 17 pour permettre un déplacement de l'élément mobile 2 vers la droite ;
- Lorsque l'élément mobile 2 est arrivé à la nouvelle position cible, le moyen 7 de verrouillage est activé.

Cette succession d'étapes est réitérée tant que l'unité de commande 100 dispose d'une position cible suivante programmée ou que l'opérateur met un terme à ce mode automatique.

La configuration de l'invention lui permet une adaptation à une utilisation dans le cadre d'une grille de perçage munie d'une unité de perçage automatisée « UPA ». En effet, dans le domaine des structures, il est fréquent qu'un grand nombre d'alésages doive être réalisé avec un positionnement très précis d'une unité de perçage automatisée par rapport à une pièce. On entend par « pièce » une pièce seule, ou une pluralité de pièces assemblées ou positionnées les unes par rapport aux autres en vue d'opérations d'assemblage. Par exemple, dans le domaine des assemblages technologiques de l'aéronautique, on utilise une grille numérique de perçage définissant de façon précise les positions auxquelles l'UPA doit réaliser les alésages.

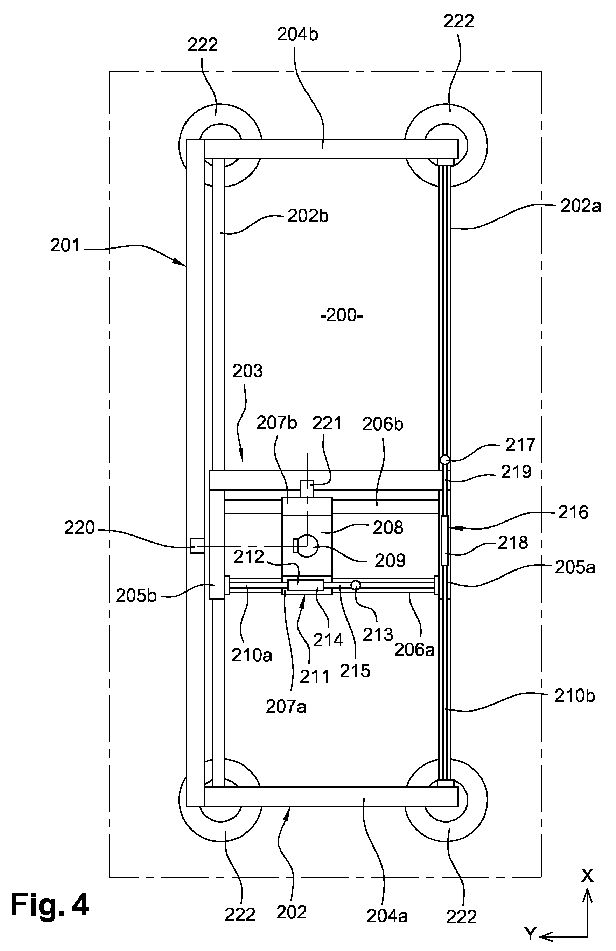

La figure 4 est une illustration de cette variante d'utilisation du dispositif selon l'invention. Une grille de perçage 200 comporte essentiellement un support 201 pour positionner une UPA (non représentée), et un ensemble de moyens d'assistance au positionnement de ladite UPA.

Le support 201 comporte une unité 202 de translation en X et une unité 203 de translation en Y. Les unités 202 et 203 de translation en X et en Y sont orientées respectivement suivant deux directions dites axes x et y, lesdits axes x et y étant sécants et de préférence orthogonaux. Dans le mode de réalisation ci-dessous décrit, la longueur de l'unité de translation en X, prise suivant l'axe x, est sensiblement plus grande que celle de l'unité de translation Y, prise suivant l'axe y.

L'unité de translation X comporte deux rails X 202a et 202b, par exemple de sections cylindriques. Les deux rails 202a et 202b sont parallèles à l'axe x. Ils sont raccordés entre eux au niveau de leurs extrémités par des éléments 204a et 204b de préférence rigides par exemple parallèles à l'axe y et de longueurs voisines de celle de l'unité 203 de translation Y.

Chaque rail X 202a, 202b est muni d'un coulisseau, respectivement 205a et 205b, apte à être déplacé dans les deux sens le long du rail X considéré suivant l'axe x, entre les éléments 204a et 204b.

L'unité 203 de translation Y comporte deux rails Y 206a et 206b, par exemple de sections cylindriques, parallèles à l'axe y dont les extrémités sont solidaires des deux coulisseaux 205a et 205b, de sorte que l'unité 203 de translation en Y, est apte à coulisser suivant l'axe x. Dans un mode de réalisation, les rails 206a et 206b sont solidarisés respectivement avec le coulisseau 205a et 205b de manière temporaire.

Chaque rail 206a, 206b de l'unité 203 de translation Y est muni d'un coulisseau Y, respectivement 207a et 207b, apte à se déplacer dans les deux sens le long des rails 206a et 206b considérés suivant l'axe y, entre les coulisseaux X 205a et 205b.

Dans l'exemple de la figure 4, le support 201 présente une forme rectangulaire de par ses unités de translations. Dans d'autres modes de réalisation, la forme de la grille peut être carrée, ou adaptée selon les modes d'utilisation. En outre, chacun des dits rails peut présenter une courbure différente pour être adapté à des courbures de la pièce à usiner.

La grille de perçage comporte un chariot 208 solidaire des deux coulisseaux 207a et 207b de l'unité 203 de translation en Y. Le chariot 208 comporte une ouverture 209 destinée à recevoir au moins partiellement une tête d'un dispositif d'outillage, tel qu'une unité de perçage (non représenté).

Le chariot 208 est apte à coulisser librement suivant l'axe x, par déplacement de l'unité 203 de translation en Y, et suivant l'axe y par déplacement dudit chariot 208 sur les rails 206a et 206b.

Le chariot 208 comporte également un moyen de verrouillage (non représenté) destiné à limiter les mouvements libres en translation dudit chariot 208 sur le rail 206a. Pour cela, le moyen de verrouillage est monté coulissant sans effort sur un rail 210a. Le rail 210a est parallèle au rail 206a. Le moyen de verrouillage est solidaire du coulisseau 207.

L'unité 203 de translation comporte également un moyen de verrouillage destiné à limiter les mouvements libres en translation de ladite unité 203 sur le rail 202a. Pour cela, le moyen de verrouillage est monté coulissant sans effort sur un rail 210b. Le rail 210b est parallèle au rail 202a. Le moyen de verrouillage est solidaire du coulisseau 205.

Selon l'invention, le chariot 208 est apte à être déplacé de manière semi-automatique où l'opérateur assure manuellement la phase d'approche au point cible, assisté d'une unité de commande 100 ou de manière totalement automatique, autrement dit, entièrement piloté par l'unité de commande 100. Pour cela, le chariot 208 comporte un moyen 211 d'accostage ou d'approche. Ce moyen 211 d'accostage a pour but de réguler la vitesse du chariot 208 lorsque ce dernier atteint une zone d'approche par rapport à une position cible à atteindre. Ce moyen 211 d'accostage comporte un vérin 212 et un organe de verrouillage 213 de préférence du même type que le moyen de verrouillage correspondant. Le vérin 212 comporte un corps 214 et une tige 215 de piston, le corps 214 est monté solidaire du moyen de verrouillage, et la tige 215 est montée solidaire de l'organe 213 de verrouillage. Dans un mode de réalisation préféré, le vérin est à double effet. Pour augmenter en précision, il est préférable que la course du vérin 212 soit faible afin d'en augmenter sa rigidité. L'organe 213 de verrouillage a pour but de verrouiller le déplacement de la tige 215 du vérin 212. L'organe 213 de verrouillage est monté coulissant sans effort sur le rail 210a.

Lorsque l'organe de verrouillage 213 est activé et que le moyen de verrouillage correspondant est désactivé, l'activation du vérin 212 permet un déplacement de son corps 214 par rapport à sa tige 215 immobile, entrainant un mouvement du chariot 208 à vitesse constante sur les rails 206a et 206b. Comme la vitesse de déplacement du chariot 208 est constante, l'unité de commande 100 peut donc anticiper l'activation du moyen de verrouillage et le chariot 208 s'arrête alors avec exactitude sur la position cible souhaitée.

L'unité 203 de translation en Y comporte également un moyen 215 d'accostage ou d'approche. Ce moyen 215 d'accostage a pour but de réguler la vitesse de l'unité 203 de translation lorsque cette dernière atteint une zone d'approche par rapport à une position cible à atteindre. Ce moyen 215 d'accostage comporte un vérin 216 et un organe 217 de verrouillage, de préférence du même type que le moyen de verrouillage correspondant. Le vérin 216 comporte un corps 218 et une tige 219 de piston, le corps 218 est monté solidaire du moyen de verrouillage, et la tige 219 est montée solidaire de l'organe de verrouillage correspondant. Dans un mode de réalisation préféré, le vérin est à double effet. Pour augmenter en précision, il est préférable que la course du vérin 216 soit faible afin d'en augmenter sa rigidité. L'organe 217 de verrouillage a pour but de verrouiller le déplacement de la tige 219 du vérin 216. L'organe 217 de verrouillage est monté coulissant sans effort sur le rail 210b.

Lorsque l'organe de verrouillage 217 est activé et que le moyen de verrouillage correspondant est désactivé, l'activation du vérin 216 permet un déplacement de son corps 218 par rapport à sa tige 219 immobile, entrainant un mouvement de l'unité 203 de translation à vitesse constante sur les rails 202a et 202b. Comme la vitesse de déplacement de l'unité 203 de translation est constante, l'unité de commande 100 peut donc anticiper l'activation du moyen de verrouillage et l'unité 203 s'arrête alors avec exactitude sur la position cible souhaitée.

De préférence, l'unité de translation X 100 est munie de moyens d'acquisition 103 de la position suivant l'axe x, et l'unité de translation Y 110 est munie de moyens d'acquisition 113 de la position suivant l'axe y.

Les moyens d'acquisition 103, 113 de chaque unité de translation respectivement X 100 et Y 110 comportent par exemple au moins un capteur linéaire magnétostrictif, à potentiomètre, inductif, ou tout autre type de capteur de position, et lesdits moyens d'acquisition sont présents sur un des deux rails ou sur les deux rails de l'unité de translation correspondante.

Les moyens d'acquisition 220 et 221 permettent de déterminer directement ou indirectement, dans un repère associé au support 201, la position du chariot, dite « position courante », où un alésage serait réalisé si l'opération d'alésage était démarrée.

Dans un mode particulier de réalisation, la grille de perçage 200 comporte également des moyens de fixation 222 pour fixer le support 201 sur la pièce à usiner, destinés à assurer un positionnement rigide dudit support sur ladite pièce.

Ce mode d'utilisation du dispositif de l'invention n'est cependant pas limitatif à l'unité de perçage et le dispositif selon l'invention est également utilisé dans d'autres exemples d'application pour effectuer d'autres types de séquences opératoires, notamment pour réaliser un contrôle non-destructif, des assemblages (insertion fixation, sertissage, etc.) ou tout autre type d'opération d'usinage (fraisage, perçage, etc.).

Le dispositif selon l'invention améliore la rapidité et la précision de la réalisation de séquences opératoires en assistant un opérateur dans le positionnement précis d'un outil. De plus, un relâchement sur la précision de positionnement du support sur la pièce n'a pas d'impact sur la précision des positions des séquences opératoires, car lesdites positions sont recalculées pour tenir compte de la position réelle du support par rapport à ladite pièce. Le dispositif est en outre utilisable pour plusieurs configurations différentes de séquences opératoires à réaliser.

## Revendications

1. Dispositif de positionnement et de verrouillage d'un élément mobile (2) à une position cible à atteindre, ledit dispositif comportant :
- un moyen (7) de verrouillage solidaire de l'élément mobile, ledit moyen de verrouillage étant monté coulissant sur un axe de verrouillage,
**caractérisé en ce qu'**il comporte,
- un moyen d'accostage (11) comportant un corps (14) creux solidaire du moyen (7) de verrouillage, dans lequel coulisse une tige (15) reliée à un organe (13) de verrouillage, ledit organe (13) de verrouillage étant monté coulissant sur l'axe de verrouillage,
et **en ce que** le corps (14) et la tige (15) forment un vérin.

2. Dispositif selon la revendication précédente, dans lequel ledit élément (2) étant monté coulissant sur un axe (6) de guidage correspondant à l'axe de verrouillage.

3. Dispositif selon l'une des revendications précédentes, dans lequel le moyen d'accostage (11) étant configuré de sorte à ce que l'organe (13) de verrouillage est activé lorsque l'élément mobile (2) se situe dans une zone d'approche prédéfinie de la position cible, de sorte à réguler la vitesse de déplacement de l'élément mobile (2) sur l'axe (6) de guidage.

4. Dispositif selon l'une des revendications précédentes, dans lequel le moyen de verrouillage étant configuré de sorte à être activé en une position verrouillée lorsque l'élément mobile (2) se situe au niveau de la position cible.

5. Dispositif selon l'une des revendications précédentes, dans lequel le vérin 12 est à double effet.

6. Dispositif selon l'une des revendications précédentes, dans lequel le l'organe (13) et le moyen (7) de verrouillage sont des cartouches de blocage.

7. Dispositif selon l'une des revendications précédentes, dans lequel l'élément mobile (2) est un chariot apte à recevoir un outil destiné à l'assemblage et/ou l'usinage et/ou le contrôle d'une pièce.

8. Procédé de mise en oeuvre du fonctionnement du dispositif selon l'une des revendications précédentes, avec les étapes suivantes:
- guidage de l'élément mobile à destination d'une position cible prédéfinie,
- dès que l'élément mobile atteint une position d'approche (Pad, Pag) séparée de la position cible d'une distance prédéfinie, on active l'organe (13) de verrouillage, et on effectue un pilotage automatique du déplacement de l'élément mobile,
- dès que l'élément mobile atteint la position cible, on active le moyen (7) de verrouillage.

9. Procédé selon la revendication précédente, dans lequel :
- entre une position de départ et une position d'approche (Pad, Pag), on effectue un pilotage automatique du déplacement de l'élément mobile sur l'axe de guidage de manière séquentielle

10. Grille de perçage pour l'exécution d'une multiplicité de trous, chacun à un emplacement déterminé dans une surface d'une structure, telle que cellule d'avion en cours d'assemblage, comportant :
- un chariot monté coulissant suivant un axe (X, Y) de guidage,
- un moyen de verrouillage solidaire de l'élément mobile et monté coulissant sur un axe de verrouillage parallèle à l'axe de guidage,
**caractérisée en ce qu'**elle comporte des moyens d'accostage comportant un corps creux solidaire d'au moins un moyen de verrouillage, dans lequel coulisse une tige reliée à un organe de verrouillage, ledit organe de verrouillage étant monté coulissant sur l'unité de translation correspondante, dans lequel le corps (14) et la tige (15) forment un vérin (12).

## Patentansprüche

1. Vorrichtung zur Positionierung und zur Verriegelung eines beweglichen Elements (2) in einer zu erreichenden Zielposition, wobei die Vorrichtung Folgendes umfasst:
- ein Verriegelungsmittel (7), das mit dem beweglichen Element fest verbunden ist, wobei das Verriegelungsmittel gleitend auf einer Verriegelungsachse montiert ist,
**dadurch gekennzeichnet, dass** diese Folgendes umfasst:
- ein Kupplungsmittel (11), das einen hohlen Körper (14) umfasst, der mit dem Verriegelungsmittel (7) fest verbunden ist, in dem eine Stange (15) gleitet, die mit einem Verriegelungsglied (13) verbunden ist, wobei das Verriegelungsglied (13) gleitend auf der Verriegelungsachse montiert ist,
und dass der Körper (14) und die Stange (15) einen Zylinder bilden.

2. Vorrichtung nach dem vorhergehenden Anspruch, wobei das Element (2) gleitend auf einer Führungsachse (6) montiert ist, die der Verriegelungsachse entspricht.

3. Vorrichtung nach einem der vorhergehenden Ansprüche, wobei das Kupplungsmittel (11) derart ausgelegt ist, dass das Verriegelungsglied (13) aktiv ist, wenn das bewegliche Element (2) in einer vordefinierten Annäherungszone an die Zielposition angeordnet ist, um die Geschwindigkeit der Verschiebung des beweglichen Elements (2) auf der Führungsachse (6) zu regeln.

4. Vorrichtung nach einem der vorhergehenden Ansprüche, wobei das Verriegelungsmittel derart ausgelegt ist, dass es in einer verriegelten Position aktiv ist, wenn das bewegliche Element (2) auf der Höhe der Zielposition angeordnet ist.

5. Vorrichtung nach einem der vorhergehenden Ansprüche, wobei der Zylinder (12) eine doppelte Wirkung aufweist.

6. Vorrichtung nach einem der vorhergehenden Ansprüche, wobei das Verriegelungsglied (13) und das Verriegelungsmittel (7) Blockierkartuschen sind.

7. Vorrichtung nach einem der vorhergehenden Ansprüche, wobei das bewegliche Element (2) ein Wagen ist, der geeignet ist, ein Werkzeug aufzunehmen, das für eine Montage und/oder Bearbeitung und/oder Steuerung eines Werkstücks bestimmt ist.

8. Verfahren zur Durchführung des Betriebs der Vorrichtung nach einem der vorhergehenden Ansprüche, mit den folgenden Schritten:
- Führen des beweglichen Elements zu dem Ziel einer vordefinierten Zielposition,
- sobald das bewegliche Element eine Annäherungsposition (Pad, Pag) erreicht, die von der Zielposition durch eine vordefinierte Distanz getrennt ist, Aktivieren des Verriegelungsglieds (13) und Durchführen einer automatischen Steuerung der Verschiebung des beweglichen Elements,
- sobald das bewegliche Element die Zielposition erreicht, Aktivieren des Verriegelungsmittels (7).

9. Verfahren nach dem vorhergehenden Anspruch, wobei:
- zwischen einer Ausgangsposition und einer Annäherungsposition (Pad, Pag) eine automatische Steuerung der Verschiebung des beweglichen Elements auf der Führungsachse auf sequentielle Weise vorgenommen wird.

10. Lochgitter zur Ausführung mehrerer Löcher, jeweils mit einer bestimmten Platzierung in einer Fläche einer Struktur, wie eines Flugwerks während der Montage, umfassend:
- einen Wagen, der gleitbar auf einer Führungsachse (X, Y) montiert ist,
- ein Verriegelungsmittel, das mit dem beweglichen Element fest verbunden ist und gleitend auf einer Verriegelungsachse parallel zu der Führungsachse montiert ist,
**dadurch gekennzeichnet, dass** dieses Kupplungsmittel umfasst, die einen hohlen Körper umfassen, der mit mindestens einem Verriegelungsmittel fest verbunden ist, in dem eine Stange gleitet, die mit einem Verriegelungsglied verbunden ist, wobei das Verriegelungsglied gleitend auf einer entsprechenden Translationseinheit montiert ist, in welcher der Körper (14) und die Stange (15) einen Zylinder (12) bilden.

## Claims

1. Device for positioning and locking a mobile element (2) in a target position that is to be achieved, the said device comprising:
- a locking means (7) secured to the mobile element, the said locking means being mounted with the ability to slide along a locking axis,
**characterised in that** it comprises,
- a docking means (11) comprising a hollow body (14) secured to the locking means (7), in which body there slides a rod (15) connected to a locking member (13), the said locking member (13) being mounted with the ability to slide along the locking axis,
and **in that** the body (14) and the rod (15) form an actuating cylinder.

2. Device according to the preceding claim, in which the said element (2) is mounted with the ability to slide along a guide axis (6) corresponding to the locking axis.

3. Device according to one of the preceding claims, in which the docking means (11) is configured so that the locking member (13) is activated when the mobile element (2) is situated in a predefined approach area of the target position, so as to regulate the speed at which the mobile element (2) travels along the guide axis (6).

4. Device according to one of the preceding claims, in which the locking means is configured so as to be activated in a locked position when the mobile element (2) is situated at the level of the target position.

5. Device according to one of the preceding claims, in which the actuating cylinder (12) is a double-acting actuating cylinder.

6. Device according to one of the preceding claims, in which the locking member (13) and the locking means (7) are blocking cartridges.

7. Device according to one of the preceding claims, in which the mobile element (2) is a carriage able to accept a tool intended for assembling and/or machining and/or inspecting a workpiece.

8. Method for implementing the operation of the device according to one of the preceding claims, with the following steps:
- guiding the mobile element until it reaches a predefined target position,
- as soon as the mobile element reaches an approach position (Pad, Pag) separated from the target position by a predefined distance, the locking member (13) is activated and the movement of the mobile element is controlled automatically,
- as soon as the mobile element reaches the target position, the locking means (7) is activated.

9. Method according to the preceding claim, in which:
- between a starting position and an approach position (Pad, Pag), the movement of the mobile element along the guide axis is controlled automatically in a sequential manner.

10. Drill jig for executing a multitude of holes, each at a determined location in a surface of a structure, such as an aircraft cell in the process of being assembled, comprising:
- a carriage mounted with the ability to slide along a guide axis (X, Y),
- a locking means secured to the mobile element and mounted with the ability to slide along a locking axis parallel to the guide axis,
**characterised in that** it comprises a docking means comprising a hollow body secured to at least one locking means, in which body there slides a rod connected to a locking member, the said locking member being mounted with the ability to slide on the corresponding translation unit, in which the body (14) and the rod (15) form an actuating cylinder (12).
